# EUROPEAN PATENT SPECIFICATION

(11) **EP 0 538 542 B1**
(45) Date of publication and mention of the grant of the patent: **03.05.1995**
(21) Application number: 91830457.7
(22) Date of filing: 25.10.1991
(51) Int. Cl.: B62J 9/00

(54) **Case for carrying animals on a motorcycle**
Behälter zum Transportieren von Tieren auf einem Motorrad
Récipient pour transporter des animaux sur une motocyclette

(43) Date of publication of application: 28.04.1993
(73) Proprietor: Logothetis, Olivier Hervé, Milano (IT)
(72) Inventor: Logothetis, Olivier Hervé, Milano (IT)
(74) Representative: Adorno, Silvano

(56) References cited:
- DE-U- 9 015 282
- FR-A- 2 657 321
- US-A- 4 696 374

## Description

The present invention relates to a case particularly suitable for carrying animals, especially dogs and cats, on a motorcycle.

It is known that at present it is not possible to carry animals, even if of small size, on a motorcycle, as cases available on sale are provided exclusively for carrying inanimate things, in particular the personal luggage of the driver and/or of the passenger. These cases in fact are completely sealed and do not allow the airing necessary for the survival of the animal. On the other hand, also independently from this problem, the animal put inside a case of this kind would suffer very much because of the unavoidable jolts due to the brakings and accelerations of the motorcycle, and resulting as well from routes with bends. Considering this aspect also any use of open cases as baskets and the like clearly may not be proposed.

The object of the present invention is thus to provide a case which at last is suitable for carrying animals of small and medium size, in particular dogs and cats, with sufficient comfort for the trasported animals.

Another object of the present invention is to provide such case also in presence on the motorcycle of the usual luggage case, as it can be fixed thereon in a simple and removable way.

These objects are achieved by a case formed of a container comprising a lower body of hard and light material on which it is hinged, on the front side according to the movement direction of the motorcycle, an upper covering element movable between a lowered position for the closing of the container and a raised position in which it acts as a windscreen, said lower body having internal fastenings for three safety belts, adjustable in length, for a safe holding of the animal, and means as well for its securing on a supporting frame suitable to be made integral with the motorcycle structure.

According to a particularly preferred embodiment of the present invention, in order to allow the transportation of cats or cubs for which it is required that the windscreen-covering is lowered, there are provided air intakes, preferably on the sides of the lower body.

Further objects, advantages and characteristics of the case according to the present invention will be clear from the following detailed description of a preferred embodiment thereof, reported as a non limiting example with reference to the attached figures in which:
FIGURES 1 and 2 show two perspective views of the case itself, respectively from the front side, with raised windscreen, and from the back side with lowered covering;
FIGURE 3 shows a lengthwise sectional view along section line III-III in Fig. 1, of the case removed from the supporting element;
FIGURE 4 shows a perspective view of a preferred embodiment of said supporting element;

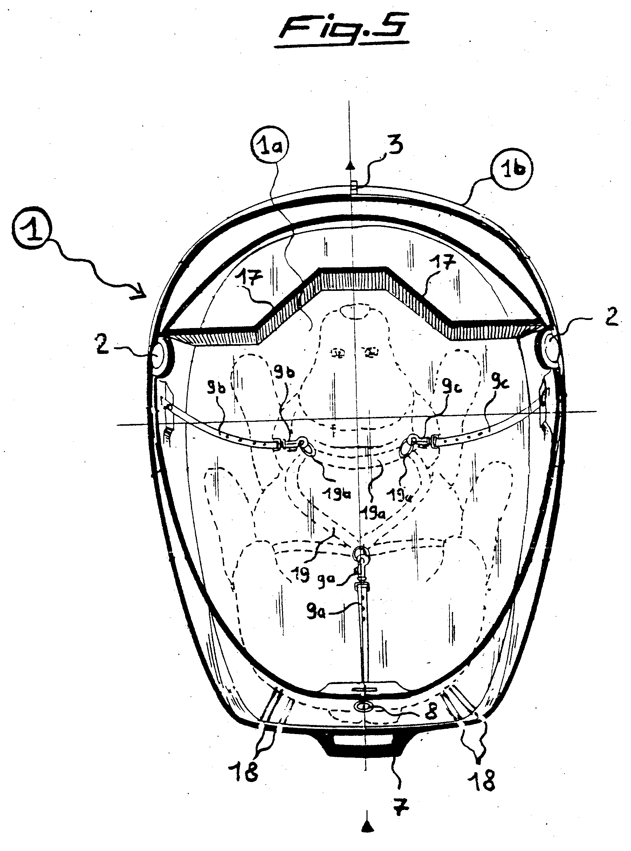

FIGURE 5 shows an elevational plane view of the case in open position, containing a dog as in Figure 3; and
FIGURE 6 shows a view similar to the one in Fig. 3, with closed covering, for carrying a cat, with the container ready to be mounted on the usual luggage case of the motorcycle.

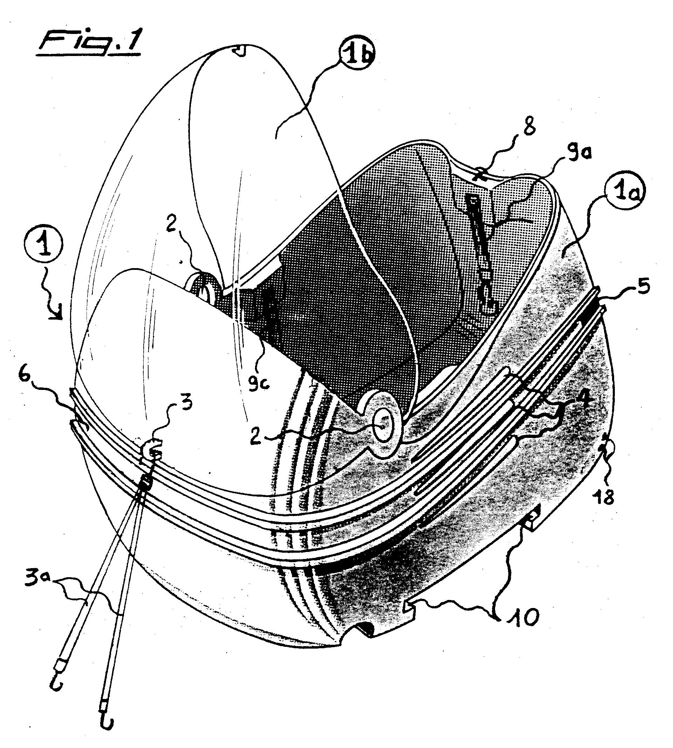

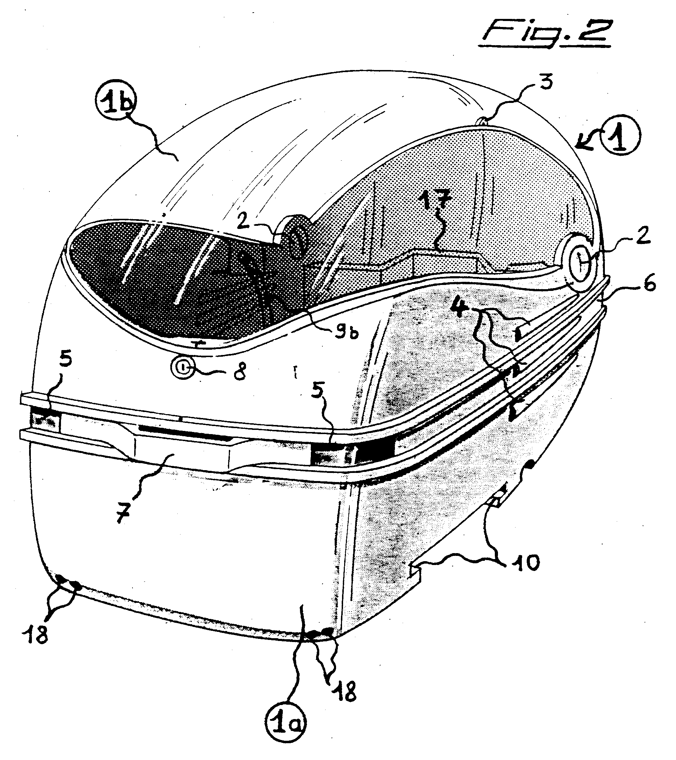

Referring to the Figures 1, 2 and 3, the case according to the present invention is formed of a container 1 of hard and light material comprising a lower body 1a, preferably of compressed polystyrene, and an upper covering 1b of transparent material as for instance plexiglas. The covering 1b is, according to the invention, movable from a raised position in which it acts as a windscreen, to a lowered position for the closing of the container. To this aim the windscreen-covering 1b is hinged on the front side of the body 1a, preferably by means of screw hinges 2, of the kind used for the visor of motorcycle helmets.

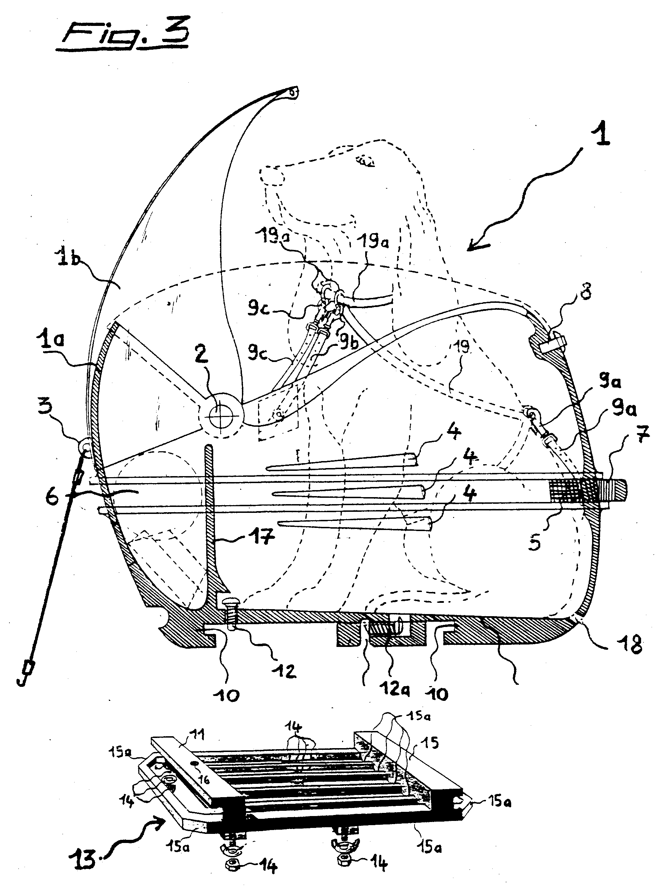

Again according to the preferred embodiment, represented in the drawings, there are provided means to keep the windscreen 1b in raised position during the transportation, for instance of a dog of medium size. With reference to Figures 1 and 3, the front edge of the windscreen 1b in such position abuts on a protruding rib of the lower body 1a, such to constitute for instance a portion of a channel 6, ornamental and eventually having stiffening characteristics for the structure, extending around the whole body 1a. In order to avoid that, due to the jolts and to the wind resistance itself the windscreen 1b may fall backwards from the raised position, there may be provided on the front side a hook or eyelet 3 through which a fixing element 3a is caused to pass to be fastened to the structure itself of the motorcycle or to the container support 13. Such fixing element may be advantageously provided by an elastic cord of known type.

It should be appreciated that such ornamental channel 6, besides forming the stop for the raised position of the windscreen 1b, may advantageously be the seat of air intakes 4 arranged sideways, necessary to assure the change of air with the outside when the container is closed with the covering 1b lowered, as required during the transportation of cats or cubs. On said channel 6 there may be advantageously mounted, on the rear side, a handle 7 suitable to help the manual carrying of the case and its holding during the mounting operations. Again on the rear zone, on the two sides of said channel there will be provided rear reflectors 5 suitable to make more visible the motorcycle, with its shape comprising the case, during the night time. Again on the rear side of the body 1b, where this is in contact with the edge of the lowered covering 1b, there has been represented in the drawings a lock 8, advantageously provided for shutting the container which may be thus used also for carrying things of a certain value, as a usual case.

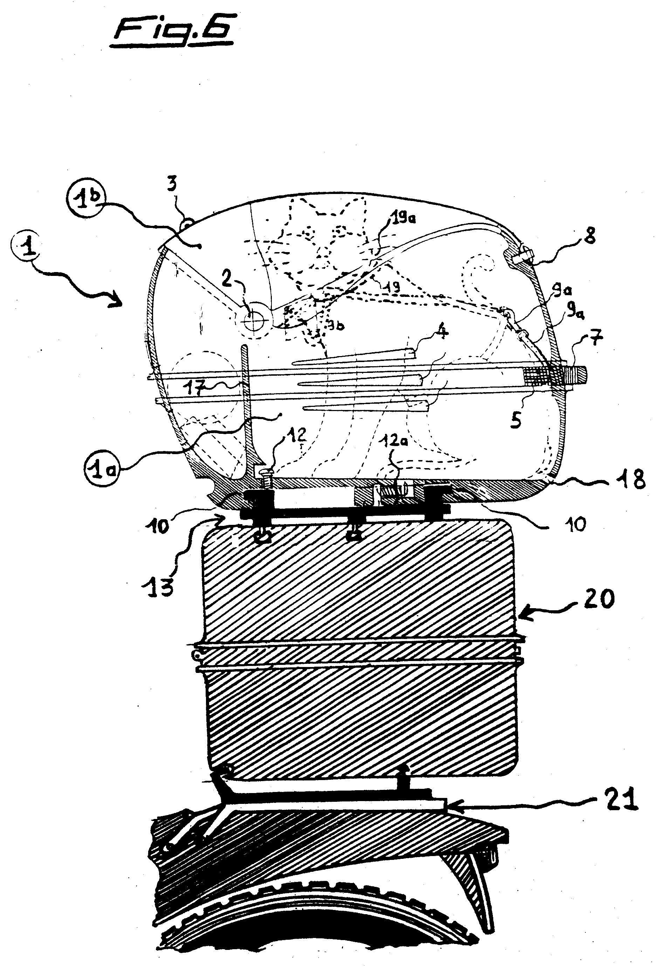

According to the present invention, inside the fixed part of the container, i.e. of the lower body 1a, there are fixed by means of suitable fastenings of known type the ends of three safety belts 9a, 9b, 9c adjustable in length, and attachable with the opposite end to special trappings to be worn by the animal. In particular there will be provided a rear belt 9a to be fixed to a particular sling 19, substantially similar to the one worn by sled dogs, which can be worn in this case also by a cat as shown in Fig. 6. The side belts 9b and 9c may be hooked up on corresponding rings, arranged on the usual collar 19a. This in order to avoid that during bendings and accelerations the animal is subjected to unnecessary efforts to balance itself. Naturally the belts are useful also to avoid that the animal may jump out from its container when the covering is open. The regulation, of known kind, is necessary for the adjustment to the size of the transported animal.

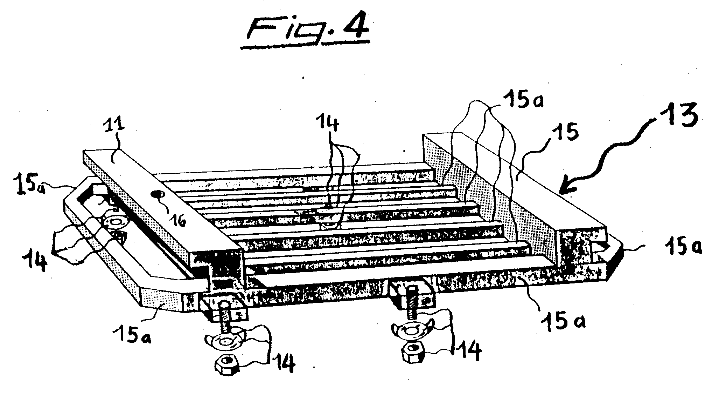

As far as the fixing support of the case on the motorcycle is concerned, it is preferably provided by two distinct elements, one of which comprises securing means 10 integral with the container bottom and the other one is a distinct support 13, fixable on the motorcycle by means of bolts 14. The element 10, and consequently the whole container 1, may be secured on the support 13 in different ways but, preferably, as represented in the drawings and in particular in Fig. 4, being the element 10 shaped as a slide, the support 13 has, on a mounting frame 15a, a guide 15 for the slide 11 of the element 10 with a hole 16 in which there snap-fits a blocking pin 12 provided on the element 10 and elastically pushed downwards, so that to assure a correct positioning of the container 1 on the support 13. Besides there may be provided a further securing means 12a provided for instance by a second elastically pushed pin , but this time in a transversal direction with respect to the blocking pin 12, so that to engage a vertical stop element on the support 13.

It should be appreciated that the support 13 may be fixed on the usual luggage case 21 of the motorcycle or, as represented in Fig. 6, on a container-case 20 of known type for carrying personal things, fixed in turn on the luggage case 21. The mounting takes place by perforating the covering of the container 20 to let pass the screw bolts 14a and block the support 13 on which there is later fixed, for instance by means of the slide element 10, the container 1 as said herein above.

Finally, inside the container 1, there may be provided a front section not used by the animal, and divided by means of a partition wall 17 from the zone in which it is accomodated, so that to create a usable room to contain different accessories such as leash, bowl, foods supplies for the animal itself and so on. The container 1, and namely its lower body 1b, may advantageously have holes 18 on the rear side of its bottom, so that to allow the draining outwards of organic liquids discharged by the animal during the journey.

From the above there clearly results that by using a case according to the present invention it is now possible the carrying of animals on a motorcycle avoiding injuries to the animal itself and assuring it at the same time a sufficient comfort. It is clear for instance that animals suffering the wind, such as cats and generally cubs, may stay closed in their container without suffering for the lack of air while animals, as dogs, which like open air may enjoy it without having to stand negative effects for their health using the above described windscreen which, being transparent, at the same time assures the animal to keep the visual contact with its master driving the motorcycle.

## Claims

1. Case for carrying animals on a motorcycle, characterized in that it is substantially formed of a container (1) comprising a lower body (1a) of hard and light material, on which it is hinged, on the front side in the advancing direction of the motorcycle, an upper covering element (1b) movable between a lowered position for the closing of the container (1) and a raised position in which it acts as a windscreen, said lower body (1a) having internal fastenings for three safety belts (9a, 9b, 9c), adjustable in length, and means (10) for the securing it on a support frame (13) suitable to be made integral with the motorcycle structure.

2. A case according to claim 1, characterized in that it comprises on the two sides of said lower body (1a) air intakes (4) for the change of air with the outside.

3. A case according to claim 1 or 2, characterized in that among said three safety belts, two of them (9b, 9c) are connected on one end to fastenings arranged on opposite sides of the container (1), transversally with respect to the movement direction of the motorcycle and hooked up on the other hand to corresponding rings provided on a collar (19b) of known kind, worn by the animal, while the third safety belt (9a) is connected with one end to a fastening arranged inside the container, in correspondance with its rear side and hooked up on the other end to a sling (19) of the animal, of the kind worn for sled drawing.

4. A case according to one of the previous claims, characterized in that said windscreen-covering (1b) is pivoted on said lower body (1a) or fixed part of the container (1) by means of two side hinges (2) of screw type, close to the front side of the container.

5. A case according to one or more of the previous claims, characterized in that it comprises means to keep said windscreen element (1b) in raised position.

6. A case according to claim 5, characterized in that said means to keep raised said windscreen (1b) comprises a stop rib on said lower body (1a) and a front hook (3) on said windscreen (1b), there being provided extended flexible means (3a) suitable to make integral to each other said hook (3) and a structural part of the motorcycle itself.

7. A case according to claim 5 or 6, characterized in that said stop rib is a part of a channel (6) which, with its ribs, extends around said lower body (1a) forming the seat for said air intakes (4) and for rear reflectors (5).

8. A case according to claim 1, characterized in that said support frame (13) comprises a guide element (15) for a slide element (11) integral to the bottom of said lower body (1a) and suitable to form said securing means (10) moreover comprising at least a pin (12) integral with said slide element (11) and elastically snap-fitting in corresponding holes (16) provided on said support frame (13).

9. A case according to one or more of the previous claims, characterized in that it further comprises an internal partition wall (17) suitable to define a zone inside the container (1), in the front zone thereof not occupied by the transported animal, for housing different accessories useful for the animal itself.

10. A case according to any one of the previous claims, characterized in that said lower body (1a) of the container has holes (18) in its rear zone, on the bottom of the container itself, suitable to discharge outwards liquids present in said container.

11. A case according to claim 1, characterized in that said support frame (13) may be made integral with the motorcycle structure by fixing with screw bolts (14) on the covering of a usual case of known kind mounted on the luggage rack of the motorcycle.

## Patentansprüche

1. Gehäuse zum Transportieren von Tieren auf einem Motorrad, dadurch **gekennzeichnet**, daß es im wesentlichen aus einem Behälter (1) gebildet ist, der einen unteren Körper (1a) aus hartem und leichtem Material umfaßt, an dem auf der vorderen Seite in Fahrtrichtung des Motorrads scharnierförmig ein oberes Deckel-Element (1b) angebracht ist, das zwischen einer abgesenkten Position zum Schließen des Behälters (1) und einer angehobenen Position, in der es als Windschild dient, beweglich ist, welcher untere Körper (1a) innere Befestigungseinrichtungen für drei Sicherheitsgurte (9a,9b,9c), die in der Länge einstellbar sind, und eine Einrichtung (10) zu seiner Befestigung an einem Trägerrahmen (13) umfaßt, der geeignet ist zur festen Verbindung mit der Motorradkonstruktion.

2. Gehäuse nach Anspruch 1, dadurch **gekennzeichnet**, daß es auf zwei Seiten des Körpers (1a) Lufteinlässe (4) zum Luftaustausch mit der Außenseite aufweist.

3. Gehäuse nach Anspruch 1 oder 2, dadurch **gekennzeichnet**, daß von den drei Sicherheitsgurten zwei (9b,9c) an einem Ende an den Befestigungseinrichtungen auf gegenüberliegenden Seiten des Gehäuses (1) angebracht sind, quer zur Bewegungsrichtung des Motorrades, und auf der anderen Seite an entsprechenden Ringen aufgehängt sind, die an einem Halsband (19b) bekannter Art vorgesehen sind, das durch das Tier getragen wird, während der dritte Sicherheitsgurt (9a) mit einem Ende and einer Befestigungseinrichtung innerhalb des Behälters an dessen Ruckseite angebracht und mit dem anderen Ende an einen Riemen (19) des Tieres gehängt ist, wie er zum Ziehen von Schlitten verwendet wird.

4. Gehäuse nach einem der vorhergehenden Ansprüche, dadurch **gekennzeichnet**, daß die Windschild-Abdeckung (1b) am unteren Körper (1a) oder festen Teil des Gehäuses (1) mit Hilfe von zwei Seitenscharnieren (2) in Schraubenform in der Nahe der vorderen Seite des Gehäuses schwenkbar angebracht ist.

5. Gehäuse nach einem oder mehreren der vorhergehenden Ansprüche, dadurch **gekennzeichnet**, daß es eine Einrichtung aufweist, die das Windschild-Element (1b) in der angehobenen Stellung hält.

6. Gehäuse nach Anspruch 5, dadurch **gekennzeichnet**, daß die Einrichtung, die den Windschild (1b) in der angehobenen Stellung hält, eine Anschlagrippe an dem unteren Körper (1a) und einen vorderen Haken (3) an dem Windschild (1b) umfaßt, wobei eine langgestreckte, flexible Einrichtung (3a) vorgesehen ist, die es gestattet, den Haken (3) und ein Konstruktionstell des Motorrades selbst miteinander zu verbinden.

7. Gehäuse nach Anspruch 4 oder 5, dadurch **gekennzeichnet**, daß die Anschlagrippe ein Teil eines Kanals (6) ist, der mit seinen Rippen um den unteren Körper (1a) herum verläuft und den Platz für die Lufteinlässe (4) und für hintere Reflektoren (5) bildet.

8. Gehäuse nach Anspruch 1, dadurch **gekennzeichnet**, daß der Trägerrahmen (13) ein Führungselement (15) für ein Gleitelement (11) am Boden des unteren Körpers (1a), des geeignet ist zur Bildung der Befestigungseinrichtung (10), und wenigstens einen Stift (12) umfaßt, der mit dem Gleitelement (11) verbunden ist und elastisch in entsprechende Bohrungen (16) am Trägerrahmen (13) einrastet.

9. Gehäuse nach einem oder mehreren der vorhergehenden Ansprüche, dadurch **gekennzeichnet**, daß es weiterhin eine innere Trennwand (17) zur Begrenzung einer Zone innerhalb des Gehäuses (1) in dessen vorderem Bereich aufweist, der nicht durch das transportierte Tier eingenommen ist und zur Aufnahme unterschiedlicher Zubehörteile dient, die für das Tier selbst nützlich sind.

10. Gehäuse nach einem der vorhergehenden Ansprüche, dadurch **gekennzeichnet**, daß der untere Körper (1a) des Gehäuses Bohrungen (18) im rückwärtigen Bereich am Boden des Behälters aufweist, die geeignet sind zur Abgabe von Flüssigkeiten, die sich in dem Behälter befinden, nach außen.

11. Gehäuse nach Anspruch 1, dadurch **gekennzeichnet**, daß der Trägerrahmen (13) mit der Motorradkonstruktion verbunden werden kann kann durch Befestigung mit Hilfe von Schrauben (14) an der Abdeckung eines normalen Gehäuses bekannter Art, das auf dem Gepäckträger des Motorrades montiert ist.

## Revendications

1. Récipient pour supporter des animaux sur une motocyclette, caractérisé en ce qu'il est formé essentiellement d'un réceptacle (1) comprenant un corps inférieur (1a) en une matière dure et légère, sur lequel est articulé, sur son coté avant dans le sens d'advancement de la motocyclette, un élément supérieur de couverture (1b) mobile entre une position basse pour fermer le réceptacle et une position haute dans laquelle il agit comme pare-brise, ce corps inférieur (1a) comportant des attaches internes pour trois courroies de sécurité (9a, 9b,9c), de longueurs réglables, et des moyens (10) pour le fixer sur un cadre de support (13) propre à être solidarisé avec la structure de la motocyclette.

2. Récipient selon la revendication 1, caractérisé en ce qu'il comporte, sur les deux cotés du corps inférieur (1a), des entrées d'air (4) pour assurer le renouvellement de l'air avec l'extérieur.

3. Récipient selon la revendication 1 ou 2, caractérisé en ce que des trois courroies de sécurité deux sont reliées par l'une de leurs extrémités à des attaches disposées sur deux cotés opposés du réceptacle (1), transversalement par rapport à la direction de mouvement de la motocyclette et accrochées par leur autre extrémité à des anneaux correspondants prévus sur un collier (19b), de type connu, porté par l'animal, alors que la troisième courroie de sécurité est reliée par l'une de ses extrémités à une attache prévue à l'intérieur du réceptacle, en correspondance avec son côté arrière, et accrochée par son autre extrémité à un harnais (19) de l'animal, du type porté par les animaux de trait.

4. Récipient selon l'une des revendications précédentes, caractérisé en ce que l'élément de couverture-écran (1b) est monté pivotant sur le corps inférieur (1a) ou sur une partie fixe du réceptacle (1) au moyen de deux charnières latérales (2) du type à vis, à proximité de la paroi avant du réceptacle.

5. Récipient selon l'une des revendications précédentes, caractérisé en ce qu'il comporte des moyens pour maintenir l'élément (1b) en position haute.

6. Récipient selon la revendication 5, caractérisé en ce que les moyens pour maintenir l'écran (1b) en position haute comprennent une nervure d'arrêt (1b) sur le corps inférieur (1a) et un crochet avant (3) sur le parebrise (1b), des moyens flexibles (3) étant prévus pour solidariser l'un à l'autre le crochet (3) et un élément de la structure de la motocyclette.

7. Rècipient selon la revendication 5 ou 6, caractérisé en ce que la nervure d'arrêt est une partie d'une gorge (6) qui, avec ses nervures, s'étend autour du corps inférieur (1a) en formant le siège des entrées d'air (4) et de réflecteurs arrière (5).

8. Récipient selon la revendication 1, caractérisé en ce que le cadre de support (13) comprend un élément de guidage (15) pour un élément de glissière (11) solidaire de la base du corps inférieur (1a) et propre à constituer les moyens de fixation (10) comportant au moins un doigt (12) solidaire de l'élément de guidage (11) et s'encliquetant élastiquement dans des trous correspondants (16) prévus sur le cadre de support (13).

9. Récipient selon l'une quelconque des revendications précédentes, caractérisé en ce qu'il comporte en outre une cloison interne (17) propre à délimiter une zone à l'intérieur du réceptacle (1), dans sa zone avant non occupée par l'animal transporté, pour loger différents accessoires utiles à l'animal.

10. Récipient selon l'une quelconque des revendications précédentes, caractérisé en ce que le corps inférieur (1a) du réceptacle comporte des trous (18) dans sa zone arrière, à la partie inférieure du réceptacle, propres à évacuer à l'extérieur les liquides présents dans le réceptacle.

11. Récipient selon la revendication 1, caractérisé en ce que le cadre de support (13) peut être solidarisé à une structure de la motocyclette par des boulons (14) prévus sur le couvercle d'un réceptacle usuel de type connu monté sur le porte-bagages de la motocyclette.
